# EUROPEAN PATENT APPLICATION

(11) **EP 4 832 232 A1**
(43) Date of publication of application: **28.10.2026**
(21) Application number: 25901522.0
(22) Date of filing: 30.09.2025
(51) Int. Cl.: H01M 50/531, B23K 31/02, H01M 50/533, H01M 50/534, H01M 50/516

(54) **BATTERY UNIT WITH IMPROVED WELDABILITY**

(30) Priority: 05.12.2024 KR 20240179135
(71) Applicant: LG Energy Solution, Ltd., Seoul 07335 (KR)
(72) Inventor: KIM, Dohyun, Daejeon 34122 (KR); YIM, Sangwook, Daejeon 34122 (KR); HONG, Junkee, Daejeon 34122 (KR); HONG, Minseok, Daejeon 34122 (KR)
(74) Representative: BCKIP Part mbB
(86) International application number: PCT/KR2025/015544
(87) International publication number: WO 2026/121526

(57) **Abstract**

A battery unit according to an embodiment of the present disclosure comprises a cell assembly including a plurality of battery cells, a busbar frame that covers at least one side surface of the cell assembly, electrode leads including a first electrode lead and a second electrode lead each protruding from the battery cell and adjacent to each other, a first rib that protrudes in the same direction as the direction in which the first electrode lead protrudes from the busbar frame, and a second rib that protrudes in the same direction as the direction in which the second electrode lead protrudes from the busbar frame, wherein the heights of the first rib and the second rib are different from each other.

## Description

### TECHNICAL FIELD

### Cross-Reference to Related Application(s)

This application claims priority to and the benefit of Korean Patent Application No. 10-2024-0179135, filed on December 5, 2024, the entire contents of which are incorporated herein by reference.

The present disclosure relates to a battery unit with improved weldability.

### BACKGROUND

Secondary batteries which are highly applicable to various products and exhibit superior electrical properties such as high energy density, etc. are commonly used not only in portable devices but also in electric vehicles or hybrid electric vehicles driven by electrical power sources. Such a secondary battery is getting a lot of attention as a novel energy source for enhancing environment friendliness and energy efficiency, in that it has a primary advantage of remarkably reducing the use of fossil fuels, and also generates no by-products from the use of energy.

Small-sized mobile devices use one or two or three battery cells for each device, whereas middle- or large-sized devices such as automobiles require high output and large capacity. Therefore, middle- or large-sized battery modules, which electrically connect a large number of battery cells, are used.

Meanwhile, recently, with the increasing necessity for a large-capacity structure that can also be used as an energy storage source, a demand for a battery pack having a multi-module structure in which a plurality of battery modules, each of which includes a plurality of secondary batteries connected in series and/or in parallel, is assembled has increased.

Meanwhile, when a plurality of battery cells are connected in series/parallel to configure a battery pack, it is common to configure a battery module composed of at least one battery cell first and then configure a battery pack by using at least one battery module and adding other components. Recently, module-less type battery module/pack structures are also being used, in which the module frame that constitutes the battery module is omitted and cell assemblies including plurality of battery cells are loaded directly on a pack frame.

A battery unit including a battery module or a battery pack includes a plurality of battery cells stacked each other and a busbar frame assembly that electrically connects the electrode leads of the plurality of battery cells. Here, the busbar frame assembly may include a busbar frame having slots through which the electrode leads of respective battery cells pass, and a busbar mounted on the busbar frame and connected to the electrode leads by welding or the like.

A welding process may be carried out when connecting the busbar to the electrode leads protruding from the battery cell stack in the battery unit. In this case, welding defects may occur according to the busbar or busbar frame structure, and improvements in the busbar or busbar frame design are required to prevent such welding defects.

### DETAILED DESCRIPTION OF THE INVENTION

### Technical Problem

It is an object of the present disclosure to provide a battery unit with improved weldability.

However, the technical objects to be solved by embodiments of the present disclosure are not limited to the above-described objects, and can be variously expanded within the scope of the technical idea included in the present disclosure.

### Technical Solution

According to an aspect of the present disclosure, provided is a battery unit comprising: a cell assembly including a plurality of battery cells, a busbar frame that covers at least one side surface of the cell assembly, electrode leads including a first electrode lead and a second electrode lead each protruding from the battery cell and adjacent to each other, a first rib that protrudes in the same direction as the direction in which the first electrode lead protrudes from the busbar frame, and a second rib that protrudes in the same direction as the direction in which the second electrode lead protrudes from the busbar frame, wherein the heights of the first rib and the second rib are different from each other.

In an embodiment, the first electrode lead may be bent at an end of the first rib, and the second electrode lead may be bent at an end of the second rib.

In an embodiment, the first electrode lead and the second electrode lead may have different polarities to each other.

In an embodiment, the first electrode lead and the second electrode lead may be formed of materials different from each other.

In an embodiment, the first electrode lead may be a positive electrode, and the second electrode lead may be a negative electrode.

In an embodiment, the first electrode lead may be bent in a first direction, and the second electrode lead is bent in a second direction, and the first direction and the second direction may be directions opposite to each other.

In an embodiment, a first bending portion where the first electrode lead extends in a bent manner and a second bending portion where the second electrode lead extends in a bent manner may overlap each other to form a welding portion, and the battery unit may further comprise a busbar that contacts the second bending portion at the overlapping portion of the first bending portion and the second bending portion.

In an embodiment, the second bending portion may be located on the busbar, and the first bending portion may be located on the second bending portion.

In an embodiment, the battery unit may further comprise a support plate disposed at the lower part of the busbar along the direction in which the busbar and the first and second bending portions overlap, and the support plate may be formed of a metal material.

In an embodiment, the first electrode lead and the second electrode lead may be adjacent to each other with the welding portion interposed between them.

In an embodiment, the first electrode leads may be formed in plural numbers to form a first electrode lead group, the second electrode leads may be formed in plural numbers to form a second electrode lead group, the first electrode lead group passes through a single slot formed in the busbar frame and then may be bent at the end of the first rib, and the second electrode leads included in the second electrode lead group each pass through a plurality of slots formed in the busbar frame and then may be bent at the end of the second rib.

In an embodiment, a first bending portion where the first electrode lead group extends in a bent manner and a second bending portion where the second electrode lead group extends in a bent manner may overlap each other to form a welding portion.

In an embodiment, the second ribs may be disposed between the slots through which each of the plurality of second electrode leads included in the second electrode lead group passes, thereby forming a plurality of second ribs, and the heights of the plurality of second ribs may be equal to each other.

In an embodiment, the second ribs may be disposed between the slots through which each of the plurality of second electrode leads included in the second electrode lead group passes, thereby forming a plurality of second ribs, and each of the heights of the plurality of second ribs may gradually decrease along the direction in which the second electrode leads extends in a bent manner.

In an embodiment, the height of the upper end of the first rib may have the same level as the height of the second electrode lead.

### Advantageous Effects

According to embodiments of the present disclosure, it is possible to minimize the gap between a plurality of electrode leads on a busbar frame, thereby improving weldability between the electrode leads.

The effects of the present disclosure are not limited to the effects mentioned above, and additional other effects not described above will be clearly understood from the description of the appended claims by those skilled in the art.

### BRIEF DESCRIPTION OF THE DRAWINGS

FIG. 1 is a perspective view showing a battery unit according to an embodiment of the present disclosure.
FIG. 2 is a perspective view showing a state in which the electrode leads are removed from the battery unit of FIG. 1.
FIG. 3 is a cross-sectional view taken along the cutting line A-A' of FIG. 1.
FIG. 4 is a diagram showing a coupling structure of electrode leads according to a comparative example.
FIG. 5 is an enlarged view showing a region P of FIG. 3.
FIG. 6 is a diagram showing a comparison between the lowest level of the first electrode lead group and the lowest level of the second electrode lead group in FIG. 5.
FIG. 7 is a diagram showing a battery unit according to another embodiment of the present disclosure.
FIG. 8 is a diagram showing a battery unit according to yet another embodiment of the present disclosure.

### DETAILED DESCRIPTION OF THE EMBODIMENTS

Hereinafter, with reference to the accompanying drawings, various embodiments of the present disclosure will be described in detail to the extent that one of ordinary skill in the art can easily practice the claimed invention. The present disclosure may be implemented in various different forms, and is not limited to the embodiments described herein.

Portions that are irrelevant to the description will be omitted to clearly describe the present disclosure, and like reference numerals designate like elements throughout the specification.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and a region are shown to be exaggerated.

Further, when a layer, film, region, plate or the like is arranged "on" a specific part, the description includes not only a case where the layer, film, region, plate or the like is arranged "directly on" the specific part, but also a case where the layer, film, region, plate or the like is arranged on the specific part via another part. When a part is arranged "directly on" another part, this indicates that no new component is present between the two parts. Further, when a component is arranged "on" a reference part, this indicates that the component is present at the top of or under the reference part, and does not necessarily indicate that the component is arranged only at the top of the reference part, which is opposite to the direction of gravity. Meanwhile, similar to the case where it is described as being located "on" or "above" another part, the case where it is described as being located "below" or "under" another part will also be understood with reference to the above-mentioned contents.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

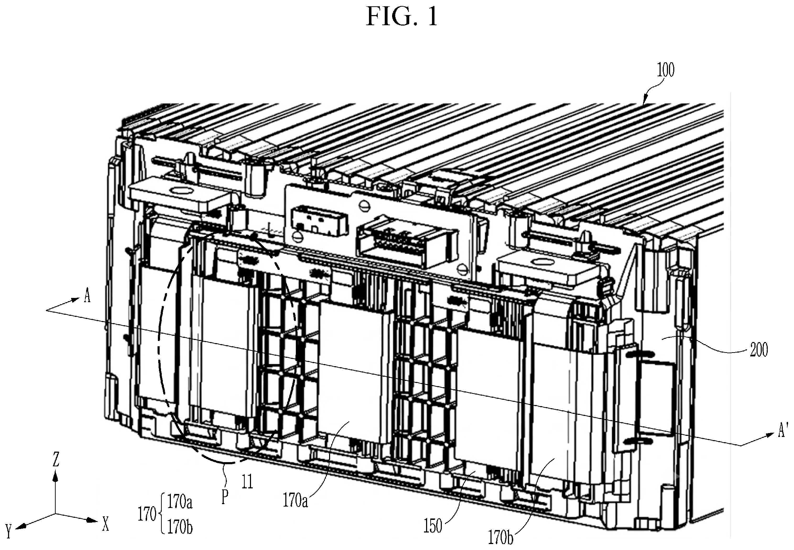

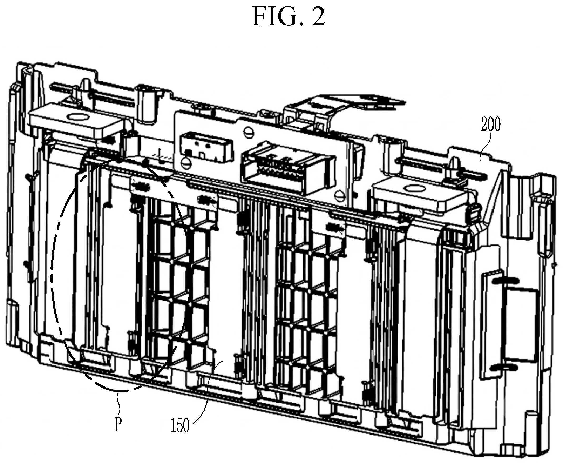

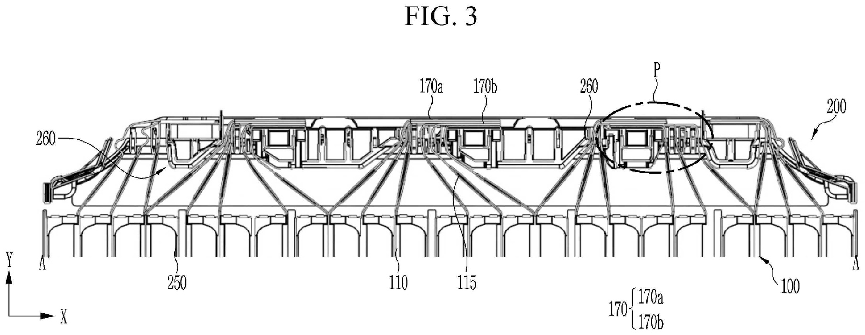

FIG. 1 is a perspective view showing a battery unit according to an embodiment of the present disclosure. FIG. 2 is a perspective view showing a state in which the electrode leads are removed from the battery unit of FIG. 1. FIG. 3 is a cross-sectional view taken along the cutting line A-A' of FIG. 1.

Referring to FIGS. 1 to 3, the battery unit according to this embodiment includes a module frame (not shown), a cell assembly 100 housed within the module frame, and a busbar frame 200 that covers at least one side surface of the cell assembly 100. In an embodiment, two busbar frames 200 may cover both side sides of the cell assembly 100, respectively. The cell assembly 100 is formed by stacking a plurality of battery cells 110 in one direction (e.g., along the X-axis).

The module frame may be in the form of a mono frame that covers four surfaces, excluding the front and rear surface of the cell assembly 100. The mono frame may be a frame that requires horizontal assembly to insert the cell assembly 100 into the mono frame. However, the module frame is not limited to the mono frame, and may include a U-shaped frame of which an upper surface, a front surface and a rear surface are opened, and an upper plate that covers the upper part of the cell assembly 100. In addition, in the case of a module-less structure, the module frame may be omitted, and the cell assembly 100 may be mounted directly to the pack frame.

In the present disclosure, the case where the battery unit is a battery module will be mainly described.

A cell terrace 115 extending from a pouch case that covers an electrode assembly included in a battery cell 110 may be formed, and an electrode lead 170 may protrude from the cell terrace 115. The spacing between adjacent cell terraces 115 may become increasingly narrow as the distance from the battery cell 110 increases. An electrode lead 170 may protrude from each of the plurality of battery cells 110, which may pass through a lead slot or a slot formed in the busbar frame 200. This will be described later.

According to this embodiment, a compression pad 250 may be formed between the outermost battery cell 110 and the side surface portion of the module frame. The compression pad 250 may be formed using a polyurethane-based material. The compression pad 250 may absorb thickness deformation due to swelling of the battery cells 110 and changes in the battery cells 110 due to external impact. The compression pad 250 may be formed not only between the outermost battery cell 110 and the side surface portion of the module frame, but also between adjacent battery cells 110, as shown in FIG. 3.

According to this embodiment, a path guider 260 may be formed on the busbar frame 200. In an embodiment, the path guider 260 is for guiding each electrode lead 170 of three adjacent battery cells 110 so as to pass through the slots, and may be formed on one side of the busbar frame 200. Specifically, the busbar frame 200 may be provided with the path guider 260 on the rear surface inside of the busbar frame 200 that is located spaced apart from the battery cells 110.

This path guide 260 may form a predetermined guide space at the rear surface of the busbar frame 200 so that the three electrode leads 170 and the cell terraces 115 can approach each other before passing through the slot. The path guides 260 may be provided in a plurality. Here, the number of path guides 260 may be provided corresponding to the number of the plurality of slots. In an embodiment, adjacent electrode leads 170 among the plurality of battery cells 110 may be paired in groups of three, and then each electrode lead 170 may pass through the slot via each path guide 260 to form a group of electrode leads 170. In addition, adjacent electrode leads 170 among the plurality of battery cells 110 may each pass through each of the plurality of slots to form a group of electrode leads 170.

The number of electrode leads 170 forming a group of the electrode lead 170 is not limited to three, and may be changed according to the arrangement of electrode leads of the positive and negative electrodes of the battery cell 110.

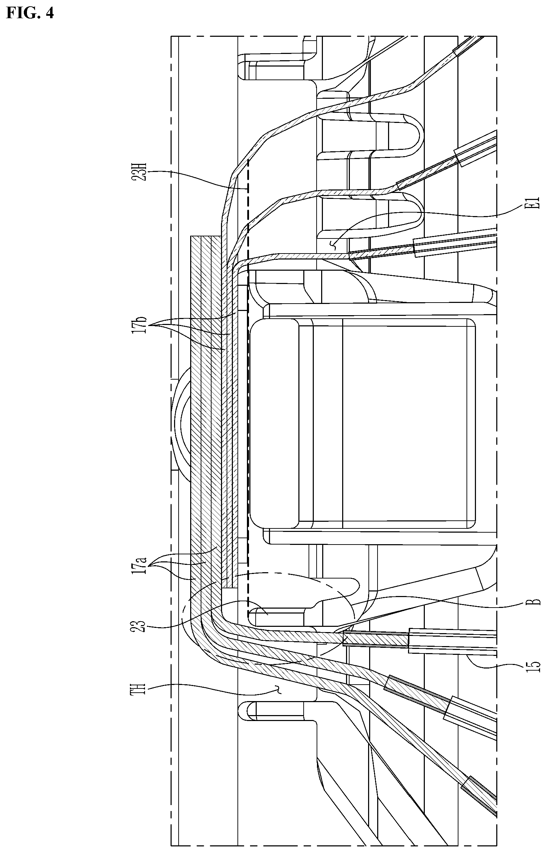

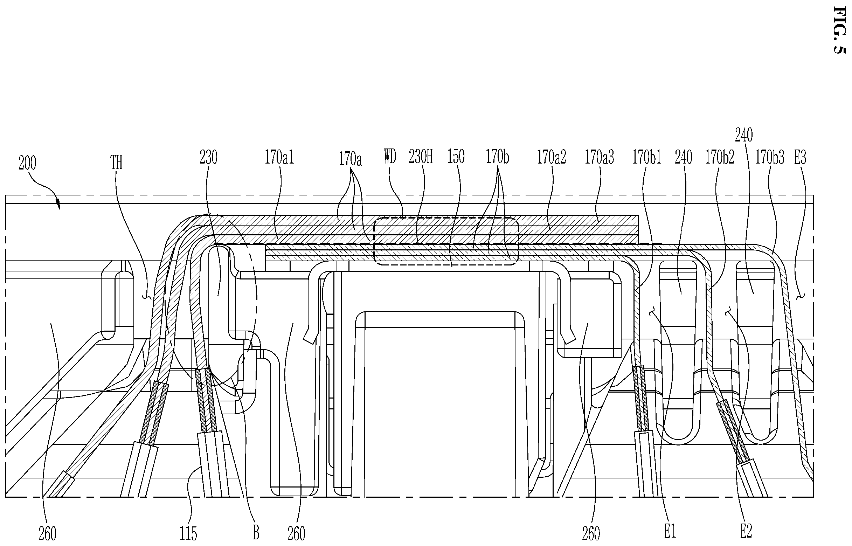

FIG. 4 is a diagram showing a coupling structure of electrode leads according to a comparative example. FIG. 5 is an enlarged view showing a region P of FIG. 3.

Referring to FIG. 4, in the battery unit according to the comparative example, the first electrode lead 17a protruding from the battery cell passes through the first slot TH of the busbar frame and then bends at the end of the first rib 23. The second electrode lead 17b passes through the second slot E1 of the busbar frame and then bends toward the direction in which the first electrode lead 17a is located. The first electrode lead 17a group and the second electrode lead 17b group meet to form an overlapping portion, and the first and second electrode leads 17a, 17b can be welded to each other at this overlapping portion. At this time, in the bending region B where the first electrode lead 17a group bends, since the height 23H of the first rib 23 is insufficient, the first electrode lead 17a may float upward at the overlapping portion. Therefore, in the overlapping portion, there is a high possibility that the portion where the first electrode lead 17a contacts the second electrode lead 17b will not be flat, which may lead to welding defects.

Referring to FIGS. 1, 3, and 5, a battery unit according to this embodiment includes a plurality of battery cells 110 stacked in one direction, and a busbar frame assembly that electrically connects the electrode leads 170 of the plurality of battery cells 110.

Here, the busbar frame assembly may include a busbar frame 200 having slots TH, E1, E2 through which electrode leads 170 protruding from each battery cell 110 pass, and a busbar 150 mounted on the busbar frame 200 and connected to the electrode leads 170 by welding or the like.

According to this embodiment, the electrode leads 170 include a first electrode lead 170a and a second electrode lead 170b having different polarities to each other. The first electrode lead 170a and the second electrode lead 170b may be formed of materials different from each other. In an embodiment, the first electrode lead 170a may be formed of aluminum, and the second electrode lead 170b may be formed of copper. In this case, the first electrode lead 170a may be a positive electrode, and the second electrode lead 170b may be a negative electrode.

The first electrode lead 170a and the second electrode lead 170b may be adjacent to each other. In an embodiment, as shown in FIG. 5, the first electrode lead 170a may be bent in a first direction, and the second electrode lead 170b may be bent in a second direction. In this case, the first direction and the second direction may be directions opposite to each other.

Referring to FIG. 5, the previously described path guider 260 may include a rib structure. The battery unit according to this embodiment includes a first rib 230 that protrudes in the same direction as the direction in which the first electrode lead 170a protrudes from the busbar frame 200 (the Y-axis direction in FIGS. 1 and 3), and a second rib 240 that protrudes in the same direction as the direction in which the second electrode lead 170b protrudes from the busbar frame 200 (the Y-axis direction in FIGS. 1 and 3). At this time, the heights of the first rib 230 and the second rib 240 are different from each other. As shown in FIG. 5, the height 230H of the first rib 230 is located higher than the upper end of the second rib 240. The height 230H of the first rib 230 described in this embodiment may refer to the size protruding in the Y-axis direction of FIG. 3 in a plan view.

In this embodiment, the first electrode lead 170a may be bent in the first direction at the end B of the first rib 230, and the second electrode lead 170b may be bent in the second direction at the end of the second rib 240. Specifically, a first bending portion where the first electrode lead 170a extends in a bent manner and a second bending portion where the second electrode lead 170b extends in a bent manner may overlap each other to form a welding portion WD. In this embodiment, the battery unit may further comprise a busbar 150 that contacts the second bending portion at the overlapping portion of the first and second bending portions.

In the battery unit according to this embodiment, the first and second electrode leads 170a, 170b having different polarities to each other may be physically directly connected to perform an electrical connection of a plurality of battery cells 110. The busbar 150 according to this embodiment may serve as a sensing plate that transmits information such as voltage and temperature from the battery cells 110 to an external device. In an embodiment, the bus bar 150 may have no slots or openings formed therein, and may have a flat plate shape as shown in FIG. 2.

As shown in FIG. 5, the second bending portion where the second electrode lead 170b extends in a bent manner may be located on the busbar 150, and the first bending portion where the first electrode lead 170a extends in a bent manner may be located on the second bent portion, and a first bending portion where the first electrode lead 170a extends in a bent manner may be located on the second bending portion. In the welding portion WD according to this embodiment, the first electrode lead 170a and the second electrode lead 170b may be welded, and the busbar 150 may be welded together with the first and second electrode leads 170a, 170b.

In this embodiment, the first electrode lead 170a portion before being bent at the end of the first rib 230 and the second electrode lead 170b portion before being bent at the end of the second rib 240 are respectively located on the left side and right side of the welding portion WD, so that the first electrode lead 170a and the second electrode lead 170b may be adjacent to each other. In other words, the welding portion WD may be disposed between the first electrode lead 170a and the second electrode lead 170b.

According to the embodiment shown in FIG. 5, the first direction and the second direction are different from each other, but as shown in a region other than the region P in FIG. 3, the first electrode lead 170a and the second electrode lead 170b may be bent and extended in the same direction to form a bending portion overlapping each other. In this case, the height of the end of the first rib corresponding to the point where the first electrode lead 170a bends may be higher than the height of the end of the second rib corresponding to the point where the second electrode lead 170b bends.

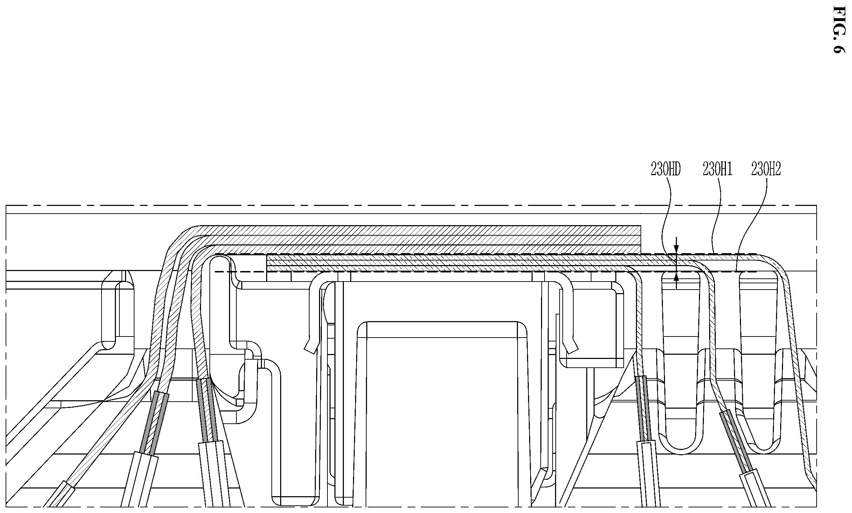

FIG. 6 is a diagram showing a comparison between the lowest level of the first electrode lead group and the lowest level of the second electrode lead group in FIG. 5.

Referring to FIGS. 5 and 6, in a battery unit according to an embodiment of the present disclosure, the first electrode leads 170a1, 170a2, 170a3 may be formed in plural numbers to form a first electrode lead group 170a, and the second electrode leads 170b1, 170b2, 170b3 may be formed in plural numbers to form a second electrode lead group 170b. In FIGS. 5 and 6, the first and second electrode lead groups 170a, 170b are respectively depicted as having three electrode leads, but the number of electrode leads 170 forming the electrode lead groups 170a, 170b is not limited to three, and may be changed according to the arrangement of the electrode leads of the positive electrode and negative electrode of the battery cell 110.

The first bending portion where the first electrode lead group 170a extends in a bent manner, and the second bending portion where the second electrode lead group 170b extends in a bent manner overlap each other to form a welding portion WD.

The first electrode lead group 170a according to this embodiment may pass through a single slot TH formed in the busbar frame 200 and then bend while wrapping the end of the first rib 230. The second electrode leads 170b1, 170b2, 170b3 included in the second electrode lead group 170b according to this embodiment may pass through plurality of slots E1, E2, E3 formed in the busbar frame 200, respectively, and then bend at the end of the second rib 240. At this time, the second ribs 240 may be disposed in plural numbers, and the heights of the plurality of second ribs 240 may be substantially equal to each other. The second electrode lead group 170b may be formed of copper, and when the second electrode leads 170b1, 170b2, and 170b3 are formed using a copper material, it is possible to enhance the bendability, so that the second electrode leads 170b can be easily bent at the ends of the second ribs 240.

Specifically, the second electrode lead 170b1 located closest to the welding portion WD of FIG. 5 is bent while wrapping the path guider (260), and the second electrode lead 170b2, which is directly adjacent to the second electrode lead 170b1 that bends while wrapping the path guider 260, may be bent while wrapping the end of the second rib 240 located between the first slot E1 and the second slot E2. The second electrode lead 170b3 located furthest from the welding portion WD may be bent while wrapping the end of the second rib 240 located between the second slot E2 and the third slot E3.

Here, the second electrode leads 170b1, 170b2, 170b3 included in the second electrode lead group 170b may be formed of a copper material. According to this embodiment, the second electrode leads 170b1, 170b2, 170b3 included in the second electrode lead group 170b may pass through plurality of slots E1, E2, E3, respectively, and then bend at the ends of the second rib 240. Therefore, it is possible to prevent corrosion caused by contact between each of the second electrode leads 170b1, 170b2, 170b3 formed of a copper material and the adjacent cell terrace 115.

Referring to FIG. 6, the height 230H1 of the upper end of the first rib 230 may have the same level as the height of the second electrode lead group 170b. Specifically, the level of the upper end of the first rib 230 may be substantially equal to the level of the bending portion of the second electrode lead 170b3 of the second electrode lead group 170b, which is furthest from the welding portion WD. In the battery unit according to this embodiment, the height 230H1 of the first rib 230 is increased by a first height 230HD compared to the comparative example of FIG. 4, thereby increasing the angle at which the first electrode lead 170a bends, and reducing the floating of the first electrode lead group 170a at the welding portion WD.

The first height 230HD may be substantially equal to the difference between the lowest level of the first electrode lead group 170a and the lowest level of the second electrode lead group 170b. Alternatively, the first height 230HD may be substantially equal to the difference between the height 230H1 of the first rib 230 according to this embodiment and the height 230H2 of the upper end surface of the busbar 150 (or the lower surface level of the second electrode lead group 170b).

Therefore, at the overlapping portion between the first electrode lead group 170a and the second electrode lead group 170b, the bending portion of the first electrode lead group 170a may be further flattened up to the end of the bending portion, thereby facilitating close contact with the second electrode lead group 170b.

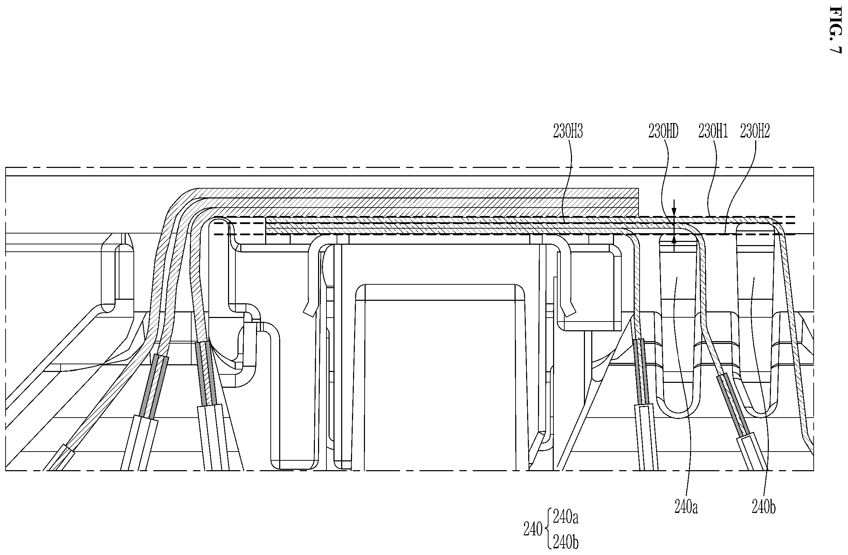

FIG. 7 is a diagram showing a battery unit according to another embodiment of the present disclosure.

The battery unit according to the embodiment of FIG. 7 has substantially the same configuration as the battery unit described in FIGS. 1, 3 and 5, however, the differences will be described below.

Referring to FIG. 7, a plurality of second electrode leads 170b1, 170b2, 170b3 included in the second electrode lead group 170b may be disposed between slots E1, E2, E3 through which they pass, thereby forming a plurality of second ribs 240. According to this embodiment, the height of each of the plurality of second ribs 240 may gradually decrease along the direction in which the second electrode leads 170b extend in a bent manner. In an embodiment, as shown in FIG. 7, the height of the second rib 240 disposed between the first slot E1 and the second slot E2 may be lower than the height of the second rib 240 disposed between the second slot E2 and the third slot E3.

Except for these differences, the contents described in FIGS. 1, 3, and 5 can also be applied to this embodiment.

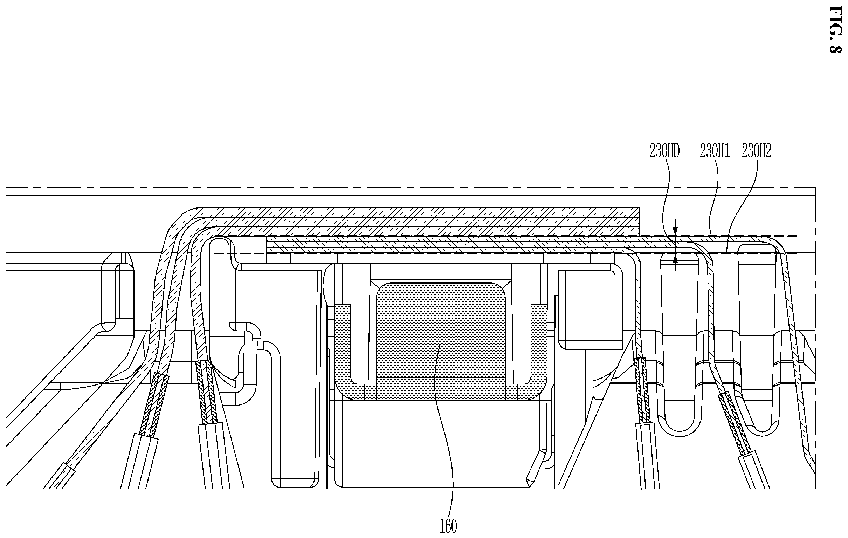

FIG. 8 is a diagram showing a battery unit according to yet another embodiment of the present disclosure.

The battery unit according to the embodiment of FIG. 8 has substantially the same configuration as the battery unit described in FIGS. 1, 3, and 5, however, the differences will be described below.

Referring to FIG. 8, the battery unit according to this embodiment may further include a busbar 150, a first bending portion where the first electrode lead 170a extends in a bent manner, and a support plate 160 disposed at a lower part of the busbar 150 along the overlapping direction of the second bending portion where the second electrode lead 170b extends in a bent manner. The support plate 160 according to this embodiment may be formed of a metal material.

In the case of welding the first and second electrode lead groups 170a, 170b and the busbar 150, when the welding jig presses the overlapping portions of the first and second electrode leads 170a, 170b and the busbar 150 from the front, there is a problem that it prevents the busbar 150 from warping, or after welding the welding portion WD penetrates through so that the busbar frame 200, which is the injection-molded product, melts. According to this embodiment, the support plate 160 is disposed at a rear surface of the busbar 150 and thus may function to protect the injection-molded product. The support plate 160 according to this embodiment may serve as a countermeasure against the problem of through-welding that occurs as the busbar 150 becomes thinner.

Except for these differences, the contents described in FIGS. 1, 3, and 5 can also be applied to this embodiment.

Meanwhile, one or more battery modules included in the battery unit according to this embodiment may be packaged inside a pack case to form a battery pack.

The battery module and the battery pack including the same as previously mentioned may be applied to various devices. Specifically, such devices can be applied to transportation vehicles such as an electric bike, an electric vehicle, and a hybrid electric vehicle. However, the present disclosure is not limited thereto, and can be applied to various devices capable of using a battery module and a battery pack including the same, which also falls within the scope of the present disclosure.

The battery module or battery pack described herein may be included in a battery unit.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

100: cell assembly
110: battery cell
115: cell terrace
150: busbar
170: electrode lead
200: busbar frame
230: first rib
240: second rib
250: compression pad
TH: slot
WD: welding portion

## Claims

1. A battery unit comprising:
a cell assembly including a plurality of battery cells,
a busbar frame that covers at least one side surface of the cell assembly,
electrode leads including a first electrode lead and a second electrode lead each protruding from the battery cell and adjacent to each other,
a first rib that protrudes in the same direction as the direction in which the first electrode lead protrudes from the busbar frame, and
a second rib that protrudes in the same direction as the direction in which the second electrode lead protrudes from the busbar frame,
wherein the heights of the first rib and the second rib are different from each other.

2. The battery unit of claim 1,
wherein the first electrode lead is bent at an end of the first rib, and the second electrode lead is bent at an end of the second rib.

3. The battery unit of claim 2,
wherein the first electrode lead and the second electrode lead have different polarities to each other.

4. The battery unit of claim 3,
wherein the first electrode lead and the second electrode lead are formed of materials different from each other.

5. The battery unit of claim 4,
wherein the first electrode lead is a positive electrode, and the second electrode lead is a negative electrode.

6. The battery unit of claim 2,
wherein the first electrode lead is bent in a first direction, and the second electrode lead is bent in a second direction, and
the first direction and the second direction are directions opposite to each other.

7. The battery unit of claim 2,
wherein a first bending portion where the first electrode lead extends in a bent manner and a second bending portion where the second electrode lead extends in a bent manner overlap each other to form a welding portion, and
the battery unit further comprises a busbar that contacts the second bending portion at the overlapping portion of the first bending portion and the second bending portion.

8. The battery unit of claim 7,
wherein the second bending portion is located on the busbar, and the first bending portion is located on the second bending portion.

9. The battery unit of claim 7,
wherein the battery unit further comprises a support plate disposed at the lower part of the busbar along the direction in which the busbar and the first and second bending portions overlap, and
the support plate is formed of a metal material.

10. The battery unit of claim 7,
wherein the first electrode lead and the second electrode lead are adjacent to each other with the welding portion interposed between them.

11. The battery unit of claim 2,
wherein the first electrode leads are formed in plural numbers to form a first electrode lead group,
the second electrode leads are formed in plural numbers to form a second electrode lead group,
the first electrode lead group passes through a single slot formed in the busbar frame and then is bent at the end of the first rib, and
the second electrode leads included in the second electrode lead group each pass through a plurality of slots formed in the busbar frame and then is bent at the end of the second rib.

12. The battery unit of claim 11,
wherein a first bending portion where the first electrode lead group extends in a bent manner and a second bending portion where the second electrode lead group extends in a bent manner overlap each other to form a welding portion.

13. The battery unit of claim 11,
wherein the second ribs are disposed between the slots through which each of the plurality of second electrode leads included in the second electrode lead group passes, thereby forming a plurality of second ribs, and the heights of the plurality of second ribs are equal to each other.

14. The battery unit of claim 11,
wherein the second ribs are disposed between the slots through which each of the plurality of second electrode leads included in the second electrode lead group passes, thereby forming a plurality of second ribs, and each of the heights of the plurality of second ribs gradually decreases along the direction in which the second electrode leads extends in a bent manner.

15. The battery unit of claim 1,
wherein the height of the upper end of the first rib has the same level as the height of the second electrode lead.
